# EUROPÄISCHE PATENTSCHRIFT

(11) **EP 4 319 956 B1**
(45) Veröffentlichungstag und Bekanntmachung des Hinweises auf die Patenterteilung: **03.07.2024**
(21) Anmeldenummer: 22835610.1
(22) Anmeldetag: 09.12.2022
(51) Int. Cl.: B29C 45/82, F04B 23/02, F15B 21/00, B29C 45/17

(54) **MASCHINENGESTELL**
MACHINE FRAME
BÂTI DE MACHINE

(30) Priorität: 17.12.2021 DE 102021133753
(43) Veröffentlichungstag der Anmeldung: 14.02.2024
(73) Patentinhaber: Arburg GmbH + Co KG, 72290 Loßburg (DE)
(72) Erfinder: BLETSCHER, Rainer, 72270 Baiersbronn (DE)
(74) Vertreter: RPK Patenanwälte Reinhardt und Kaufmann Partnerschaft mbB (Pforzheim)
(86) Internationale Anmeldenummer: PCT/EP2022/085163
(87) Internationale Veröffentlichungsnummer: WO 2023/110667

(56) Entgegenhaltungen:
- WO-A1-94/18459
- DE-A1- 2 201 078
- DE-A1- 4 304 721
- DE-U1-202010 004 337
- US-B2- 6 978 608

## Beschreibung

Die vorliegende Erfindung liegt auf dem Gebiet eines Maschinengestells einer Maschine zur Verarbeitung von Kunststoffen und anderer plastifizierbarer Massen, insbesondere einer Spritzgießmaschine und/oder deren Peripherie, mit einer Motor-Pumpeneinheit zur Förderung eines Hydraulikmediums aus einem Behälter in einen Kreislauf nach dem Oberbegriff des Anspruches 1.

### Stand der Technik

Im Stand der Technik finden sich verschiedene Systeme zur Lagerung einer Motor-Pumpeneinheit zur Förderung von Öl. Die Bandbreite reicht von gedämpften bis hin zu ungedämpften Systemen, welche entweder außerhalb eines Ölreservoirs oder innerhalb eines Ölreservoirs angebracht sind.

Eine oft verwendete Lösung ist, dass der Motor und die Pumpe einer Motor-Pumpeneinheit außerhalb vom Ölbehälter angeordnet und über geeignete Dämpfungselemente schwingungsentkoppelt gelagert sind. Nachteilig, neben der schwingungsentkoppelten Befestigung, welche an einer geeigneten Position mit ausreichender Grundsteifigkeit befestigt werden muss, ist zudem, dass der Sauganschluss technisch aufwendig durch die Ölbehälterwand durchgeführt werden muss. Zusätzlich geht von der außenliegenden Pumpe noch der Druckschlauch ab, wobei die ölführenden Schläuche bzw. Anschlüsse (Druck- und Saugseite) bei kleinster Leckage für eine Kontamination der Umgebung sorgen.

Z.B. ist in der DE 41 40 385 A1 eine Pumpenkombination offenbart, welche außerhalb des Ölbehälters angeordnet ist. Die Pumpenkombination ist über eine Förderleitung mit dem ÖIbehälter und dem einzigen Ventilblock verbunden, der auf dem Ölbehälter angeordnet ist.

Eine weitere Lösung im Stand der Technik ist ölbehälterbegrenzende Wände zur Befestigung der Antriebskomponenten heranzuziehen, wobei die Pumpe innerhalb des Ölbehälters angeordnet und der Motor starr oder gedämpft mit der Ölbehälterwand verschraubt wird (z.B. DE 22 01 078 A1). Der Nachteil bei dieser Lösung ist, dass die Ölbehälterkonstruktion die auftretenden Kräfte infolge der Motor-Pumpenbefestigung und die im Betrieb resultierenden Schwingungen aufnehmen muss.

Die DE 100 16 517 A1 offenbart einen Träger zur Verbindung eines Antriebsmotors mit einer Hydromaschine, welcher ein Gehäuse für eine Axialkolbenpumpe aufweist.

In dem Dokument DE 44 03 139 A1 ist ein Unteröl-Pumpenaggregat offenbart, dessen Hydropumpe in einem Gehäuse angeordnet ist. Die Aufhängung und Befestigung des Unteröl-Pumpenaggregats im Behälter erfolgt mittels eines Tragebügels, welcher waagerecht angeordnet ist und über elastische Dämpfungselemente im Behälter lösbar befestigt ist.

Die US 6,978,608 B2 offenbart ein Hydraulikaggregat für eine Kunststoffverarbeitungsmaschine, wobei der Antriebsmechanismus der Pumpe innerhalb eines Tanks angeordnet ist, um eine Schall- und Vibrationsdämpfung zu erzielen.

In der DE 43 047 21 A1 ist eine hydraulisch betriebene Maschine offenbart, wobei in einer Seitenwand eines Tankraums eine Motor-Pumpeneinheit angeordnet ist. Der Motor der Motor-Pumpeneinheit ist außerhalb des Tanks und die Pumpe innerhalb des Tanks angeordnet.

Ähnlich offenbart die DE 20 2010 004 337 U1 ein Hydraulikaggregat für eine kunststoffverarbeitende Maschine. Ein Antrieb für eine Pumpe, welche in einem Tank angeordnet ist, ist an einer Seitenwand im oberen Bereich über einen Dämpfungsring befestigt.

In der WO 94/18459 A1 ist ein Hydraulikaggregat mit einem Ölbehälter und einer Pumpeneinheit offenbart, wobei die Pumpe bzw. die Pumpeneinheit in einer Kapsel aufgenommen ist, welche durch den Ölbehälter gebildet ist und über Dämpfungslager gedämpft wird. Ausgehend von diesem Stand der Technik liegt der vorliegenden Erfindung die Aufgabe zugrunde, ein Maschinengestell einer Maschine zur Verarbeitung von Kunststoffen und anderer plastifizierbarer Massen, insbesondere einer Spritzgießmaschine und/oder deren Peripherie bereitzustellen, wodurch sich vorteilhaft eine einfache und sichere Konstruktion des Behälters als auch ein vibrationsarmer und sauberer Betrieb der Motor-Pumpeneinheit ergibt.

Diese Aufgabe wird durch ein Maschinengestell einer Maschine zur Verarbeitung von Kunststoffen und anderer plastifizierbarer Massen, insbesondere einer Spritzgießmaschine und/oder deren Peripherie, mit den Merkmalen des Anspruches 1 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Das Maschinengestell einer Maschine zur Verarbeitung von Kunststoffen und anderer plastifizierbarer Massen, insbesondere einer Spritzgießmaschine und/oder deren Peripherie, z.B. ein Robot oder ein Greifer weist wenigstens einen Behälter, z.B. ein Hydraulikmediumbehälter oder ein Ölbehälter, und wenigstens eine als starre bauliche Einheit ausgebildete Motor-Pumpeneinheit zur Förderung eines Hydraulikmediums, z.B. Öl aus dem Behälter in einen Kreislauf, auf. Die Motor-Pumpeneinheit weist wenigstens eine Pumpe und wenigstens einen Motor auf, welche über wenigstens ein Wirkverbindungsmittel miteinander gekoppelt sind. Weiter ist wenigstens eine konstruktive räumliche Trennung vorgesehen, wobei die Motor-Pumpeneinheit bezüglich der konstruktiv räumlichen Trennung so angeordnet ist, dass die Motor-Pumpeneinheit wenigstens teilweise die konstruktive räumliche Trennung so durchdringt, dass die Pumpe der Motor-Pumpeneinheit wenigstens teilweise, vorzugsweise vollständig, konstruktiv räumlich getrennt von dem Motor der Motor-Pumpeneinheit ist. Für eine vorteilhaft einfache und sichere Konstruktion des Behälters als auch für einen vibrationsarmen und sauberen Betrieb der Motor-Pumpeneinheit ist zur wenigstens teilweisen Lagerung der Motor-Pumpeneinheit wenigstens ein Lagerelement, z.B. ein Gussträger vorgesehen, welches entkoppelt vom Behälter befestigt ist. Vorteilhaft erfolgen durch das Lagerelement auch eine Justierung und Fixierung der Motor-Pumpeneinheit.

Die konstruktiv räumliche Trennung ist so ausgeführt und die Motor-Pumpeneinheit bezüglich der konstruktiven räumlichen Trennung so angeordnet, dass die Pumpe der Motor-Pumpeneinheit wenigstens zu einem Teil, vorzugsweise komplett, innerhalb, vorzugsweise in einem Behälterraum, und gleichzeitig der Motor der Motor-Pumpeneinheit wenigstens zu einem weiteren Teil, vorzugsweise komplett, außerhalb des Behälters, vorzugsweise in einem Motorraum, angeordnet sind, wobei das Lagerelement wenigstens ein Trennelement aufweist und die konstruktive räumliche Trennung wenigstens durch das Trennelement gebildet wird. Vorteilhaft ergeben sich durch die Anordnung der Pumpe und somit aller erforderlichen Saug- und Druckleitungen innerhalb des Behälters im Falle von Leckagen keine Probleme, da austretendes Hydraulikmedium, z.B. Öl vom Behälter aufgefangen wird, sodass keine Kontamination der Umgebung, beispielsweise des Motorraums erfolgen kann.

Konstruktiv heißt in diesem Zusammenhang, dass beispielsweise eine bauliche Trennung, z.B. eine Behälterwand oder eine sonstige Trennwand vorgesehen ist, wodurch die Pumpe und der Motor in räumlicher Hinsicht getrennt voneinander werden. Die konstruktive räumliche Trennung kann beliebig ausgeführt sein, beispielweise als Blech oder als eine Behälterwandung. Die Pumpe und der Motor sind bevorzugt separat in verschiedenen, durch die konstruktive räumliche Trennung getrennten Räumen angeordnet, beispielsweise in einem Behälterraum und in einem Motorraum, während die (starre) Motor-Pumpeneinheit sozusagen in beiden Räumen gleichzeitig angeordnet ist. Vorteilhaft ergibt sich so eine einfache und sichere Konstruktion des Behälters, und gleichzeitig ein vibrationsarmer und sauberer Betrieb der Motor-Pumpeneinheit, da durch die getrennte konstruktive räumliche Trennung der Pumpe und des Motors z.B. alle erforderlichen Druck- und/oder Saugleitungen der Pumpe getrennt vom Motor innerhalb des Behälters angeordnet sind. Weiter vorteilhaft erzeugen eventuelle Leckagen an der Pumpe, z.B. im Druck- und/oder Saugschlauch infolge der konstruktiven räumlichen Trennung von Pumpe und Motor keine Kontaminationsprobleme. Vorteilhaft kann durch die konstruktive räumliche Trennung eine einfache und saubere Wartung beispielsweise des Motors erfolgen. So muss vorteilhaft z.B. nicht zuerst das Hydraulikmedium, z. B. Öl aus dem Behälter abgelassen werden, um den Motor zu warten.

Durch die vom Behälter entkoppelte Befestigung des Lagerelements zur Lagerung der Motor-Pumpeneinheit können weiter vorteilhaft lediglich wenig bis keine Anforderungen, insbesondere Festigkeitsanforderungen an den Behälter gestellt werden. Der Behälter kann so lediglich als ein einfaches Behältnis ausgeführt werden, ohne dass Festigkeits- und Steifigkeitsanforderungen hinsichtlich der Lagerung der Motor-Pumpeneinheit beachtet werden müssen. Entkoppelt heißt in diesem Zusammenhang, dass zumindest das Lagerelement keine unmittelbare Wechselwirkung mit dem Behälter aufweist, z.B. nicht unmittelbar mit dem Behälter verbunden ist.

Das Lagerelement kann prinzipiell beliebig ausgestaltet sein, wobei es für eine vorteilhaft stabile Konstruktion bevorzugt wenigstens ein Zehntel der Masse der Motor-Pumpeneinheit aufweist und/oder entsprechend ausgesteift ist.

Das Lagerelement kann weiter bevorzugt so ausgeführt sein, dass die Lagerung der Motor-Pumpeneinheit damit im Wesentlichen horizontal erfolgt. Vorteilhaft ergibt sich so eine platzsparende Lagerung der Motor-Pumpeneinheit.

Durch die bevorzugte Befestigung des Lagerelements außerhalb des Behälters haben Wechselwirkungen mit anderen Komponenten, beispielsweise Vibrationen des Motors, vorteilhaft einen wesentlich geringeren Einfluss auf den Behälter. Weiter vorteilhaft kann so der Behälter einfach, insbesondere hinsichtlich Festigkeits- und Steifigkeitsanforderungen ausgestaltet und dimensioniert sein.

Bevorzugt ist das Lagerelement am Maschinengestell befestigt, wodurch sich vorteilhaft eine erhöhte Stabilität ergibt und der Behälter als reines Behältnis ohne Festigkeits- und/oder Steifigkeitsanforderungen ausgeführt werden kann. Weiter vorteilhaft ergibt sich so ein platzsparender Aufbau.

Weiter bevorzugt erfolgt die Befestigung des Lagerelements an einem hinsichtlich Festigkeit und Stabilität optimalen Punkt des Maschinengestells, beispielsweise in einem oberen und "steifen" Bereich des Maschinengestells, wodurch vorteilhaft die Stabilität weiter erhöht wird und Wechselwirkungen, insbesondere Vibrationen weiter vermindert werden. Prinzipiell möglich ist aber auch eine Befestigung des Lagerelements in einem stabilen Bereich beispielsweise im oder am Boden des Maschinengestells.

Für eine vorteilhaft einfache Montage und Befestigung des Lagerelements kann bevorzugt das Maschinengestell für die Befestigung des Lagerelements wenigstens ein Auflageelement aufweisen. Das Auflageelement kann beispielsweise als eine Platte ausgeführt sein, auf welche das Lagerelement und/oder wenigstens ein entsprechendes Teil des Lagerelements gelegt wird. Prinzipiell kann das Lagerelement beliebig ausgeführt sein. Bevorzugt kann das Auflageelement wenigstens eine Ausnehmung aufweisen, welche das Lagerelement und/oder wenigstens ein entsprechendes Teil des Lagerelements formschlüssig so aufnimmt, dass vorteilhaft eine besonders einfache und stabile Aufnahme des Lagerelements in das Aufnahmeelement erfolgen kann. Vorteilhaft ist es dann nicht mehr möglich, das Lagerelement "falsch" mit dem Maschinengestell zu verbinden. Damit kann bereits vom Maschinenhersteller auf eine zuverlässige und konstruktiv optimale Lagerung der Motor-Pumpeneinheit hingewirkt werden. Weiter vorteilhaft erfolgen so ebenfalls eine Fixierung und Justage der Motor-Pumpeneinheit.

Bevorzugt kann das Lagerelement und/oder das Auflageelement wenigstens eine Führung für das Lagerelement und/oder das Auflageelement aufweisen, wodurch vorteilhaft die Verbindung der Teile präziser und einfacher ist. Beispielsweise weist das Auflageelement eine Führung in Form einer Ausnehmung für das Lagerelement auf, wodurch sich vorteilhaft die Verbindung des Lagerelements mit dem Auflageelement vereinfacht und stabilisiert.

Bevorzugt erfolgt die Befestigung des Lagerelements am Maschinengestell wesentlich in senkrechter Richtung. Vorteilhaft führt dies so zu einer einfachen, sicheren und stabilen Montage und Befestigung des Lagerelements. Vorteilhaft werden so Kräfte vermieden, welche seitlich z.B. in einem rechtem Winkel auf die Befestigung einwirken, wodurch eine zusätzliche Belastung und Scherwirkung auf die Befestigung erfolgen würde. Beispielsweise kann das Lagerelement am Maschinengestell mit entsprechenden Befestigungsmitteln befestigt werden.

Für eine vorteilhafte Abdichtung weist das Lagerelement bevorzugt wenigstens ein Plattenelement auf. Das Trennelement kann beispielsweise als ein Blech ausgeführt sein und dient unter anderem zur Trennung des Pumpenbereichs gegenüber dem Motorbereich. Das Trennelement kann bevorzugt an der Behälterwandung befestigt sein. Das Trennelement hat bevorzugt eine trennende und/oder abdichtende Funktion und ist an der Behälterwandung befestigt. Bevorzugt dichtet das Trennelement mit wenigstens einem Dämpfung- und/oder Dichtungselement die Durchdringung der Motor-Pumpeneinheit ab. Das Plattenelement kann bevorzugt für eine einfache Montage und/oder Demontage der Motor-Pumpeneinheit von oben dafür vom Trennelement abgenommen werden. Eingesetzt verschließt das Plattenelement die entsprechende Öffnung im Behälter.

Vorteilhaft für einen einfachen Komponententausch, beispielsweise der Motor-Pumpeneinheit während eines Servicefalls, ist bevorzugt das Plattenelement lösbar mit dem Lagerelement, bevorzugt mit dem Trennelement, der Behälterwandung und/oder dem Maschinengestell verbunden. Beispielsweise kann bei einer Wartung zunächst das Plattenelement von der Behälterwandung gelöst werden. Anschließend kann das Lagerelement mit der Motor-Pumpeneinheit demontiert werden und so die Motor-Pumpeneinheit einfach gewartet oder getauscht werden. Beim Einbau wird vorzugsweise zunächst das Lagerelement mit der Motor-Pumpeneinheit montiert. Im Anschluss daran wird das Plattenelement z.B. mit der Behälterwandung verbunden, wodurch vorteilhaft die Durchdringung der Motor-Pumpeneinheit abgedichtet wird.

Bevorzugt wird die konstruktive räumliche Trennung wenigstens durch ein Teil einer Behälterwandung und/oder das Plattenelement gebildet. Vorteilhaft ergibt sich somit eine einfache Trennung der Pumpe und des Motors der Motor-Pumpeneinheit. Beispielsweise kann sich die konstruktive räumliche Trennung aus dem Trennelement, welches in den Teil der Behälterwandung eingesetzt wird, und dem Plattenelement, welches an der Behälterwandung lösbar angebracht ist, und der Behälterwandung zusammensetzen. Das Trennelement, das Plattenelement und die Behälterwandung bilden zusammen mit der durch das Lager- und/oder Trennelement dringenden Motor-Pumpeneinheit eine Begrenzung bzgl. des Behälterraums.

Vorzugsweise weist das Trennelement und/oder das Lagerelement wenigstens eine Ausnehmung auf, durch die wenigstens ein Teil der Motor-Pumpeneinheit dringen kann. Bevorzugt durchdringt die Motor-Pumpeneinheit die Ausnehmung so, dass das Trennelement die Motor-Pumpeneinheit in wenigstens zwei Bereiche, z.B. einen Pumpenbereich und einen Motorbereich aufteilt.

Bevorzugt ist die Behälterwandung in einem Bereich ausgespart, in welchem zumindest das Trennelement und/oder das Plattenelement lösbar angeordnet ist. Bevorzugt passt das Trennelement formschlüssig in die Aussparung der Behälterwandung, wodurch sich vorteilhaft eine platzsparende Konstruktion ergibt. Weiter vorteilhaft ist durch die lösbare Anordnung ein schnelles und einfaches Einsetzen des Trennelements und/oder der Motor-Pumpeneinheit beispielsweise mittels eines Krans möglich. Beispielsweise kann für eine vorteilhafte einfache Konstruktion die Aussparung bevorzugt eine U-ähnliche Form aufweisen.

Bevorzugterweise ist die konstruktive räumliche Trennung hermetisch dicht. Vorteilhaft kann so kein Fluid, z.B. Öl und/oder Gas, z.B. Ölnebel von der Pumpe, die konstruktive räumliche Trennung durchdringen. Weiter vorteilhaft ergibt sich so ein insgesamt sauberer Betrieb, da kein Hydraulikmedium, z.B. Öl von dem Behälterraum in den Motorraum dringen kann.

Für eine vorteilhaft einfache und sichere Konstruktion und einen sauberen Betrieb ist bevorzugt wenigstens das Lagerelement, das Trennelement, das Plattenelement, die Motor-Pumpeneinheit und/oder der wenigstens eine Teil der Behälterwandung so angeordnet und miteinander gekoppelt, dass die konstruktive räumliche Trennung hermetisch abgedichtet ist. Beispielsweise bilden das Trennelement, das Plattenelement, die Motor-Pumpeneinheit und/oder der wenigstens eine Teil der Behälterwandung zusammengenommen bevorzugt sozusagen eine "vollständige" hermetisch dichte Behälterwandung, welche den Behälterraum gegenüber dem Motorraum abdichtet. Die hermetische Dichtigkeit im Durchdringungsbereich der konstruktiven räumlichen Trennung mit der Motor-Pumpeneinheit kann bevorzugt mittels wenigstens eines Dämpfungs- und/oder Dichtungselements erreicht werden.

Vorzugsweise weist das Lager-, das Trenn-, das Plattenelement und/oder der wenigstens eine Teil der Behälterwandung wenigstens ein Dämpfungselement und/oder wenigstens ein Dichtungselement auf. Vorteilhaft wird beispielsweise mit einer Dichtung im Durchführungsbereich zwischen dem Motorraum und dem Behälterraum selbst bei Bewegungen der "weich" gelagerten Motor-Pumpeneinheit eine Dichtigkeit zwischen Behälter und Umgebung gewährleistet. Weiter vorteilhaft erhält man z.B. über eine unterschiedliche Anzahl von Dämpfungselementen und/oder über eine Variation der Härte der Dämpfungselemente eine große Bandbreite an schwingungsoptimierten Lagerungsvarianten, mit denen sich viele Kombinationen von Motor-Pumpeneinheiten abdecken lassen. Beispielsweise kann durch ein Blech mit unterschiedlichen Dichtungssystemen, z.B. einer geschäumten Dichtschnur außen und einem Kantenprofil mit einem Dichtelement, der Behälterbereich trotz Durchdringen der Motor-Pumpeneinheit hermetisch gegenüber der Umwelt, z.B. dem Motorraum abgedichtet werden, sodass kein Tropföl oder Ölnebel einen äußeren Bereich kontaminiert. Damit können vorteilhaft durch die Dämpfungs- und/oder Dichtungselemente, beispielsweise über ein Kantenschutzprofil mit Dichtlippe, die Bewegungen der Pumpe infolge ihrer Dynamik ausgeglichen und somit gleichzeitig vorteilhaft z.B. ein Ölaustritt nachhaltig verhindert werden. Bevorzugt sind die Dämpfung- und/oder Dichtungselemente vorteilhaft zur besseren Führung in das Lagerelement und/oder das Auflageelement wenigstens teilweise eingelassen.

Für eine vorteilhaft einfache Montage und/oder Demontage bilden bevorzugt die Motor-Pumpeneinheit, das Lagerelement und/oder das Trennelement eine vormontierte Baugruppe. Vorteilhaft kann so ein deutlich einfacherer und schnellerer Komponententausch im Fall eines Servicefalls erfolgen.

Um vorteilhaft einer Schädigung aufgrund einer Vorspannung beim Einbau der konstruktiven räumlichen Trennung und/oder des Trennelements entgegenzuwirken, weist bevorzugt die konstruktive räumliche Trennung und/oder das Trennelement wenigstens ein Abstandselement auf, welches beispielsweise als ein umgekantetes oder gedoppeltes Blech ausgeführt sein kann.

Für eine vorteilhaft einfache und positionsgetreue Befestigung des Lagerelements weist bevorzugt das Lagerelement wenigstens eine Aufnahme auf, in welcher formschlüssig die Dämpfungselemente aufgenommen werden.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:
- Fig. 1: eine perspektivische Ansicht eines Maschinengestells mit einer Lagerung einer Motor-Pumpeneinheit,
- Fig. 2: eine weitere perspektivische Ansicht des Maschinengestells gemäß Fig. 1 mit Blick auf den Motor der Motor-Pumpeneinheit,
- Fig. 3: eine Motor-Pumpeneinheit mit Lager-, Trenn- und Plattenelement,
- Fig. 4: die Motor-Pumpeneinheit mit Lager-, Trenn- und Plattenelement gemäß Fig. 3 mit Blick auf den Motor,
- Fig. 5: einen Schnitt durch das Maschinengestell gemäß Fig. 1 und 2,
- Fig. 6: eine Detailansicht des Ausschnittes B von Fig. 5,
- Fig. 7: eine Draufsicht auf das Maschinengestell gemäß Fig. 1 und 2,
- Fig. 8: eine Detailansicht entlang Linie C - C von Fig. 7.

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

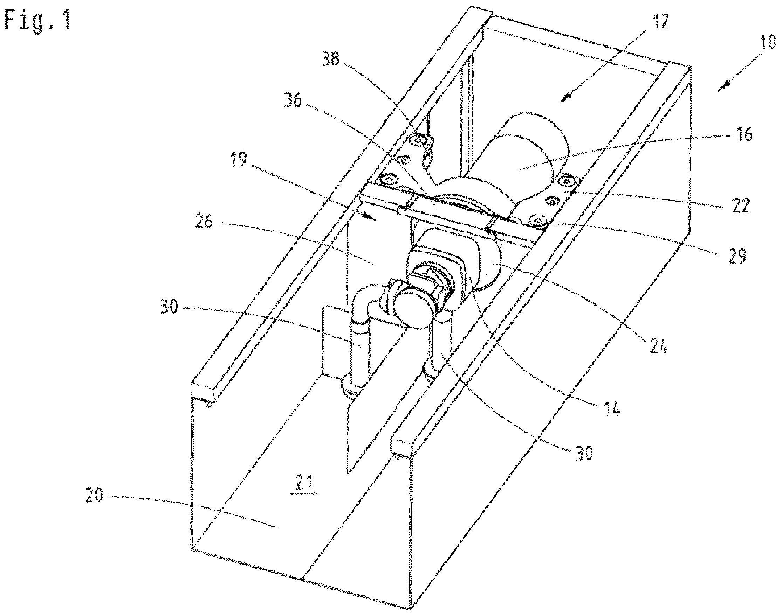

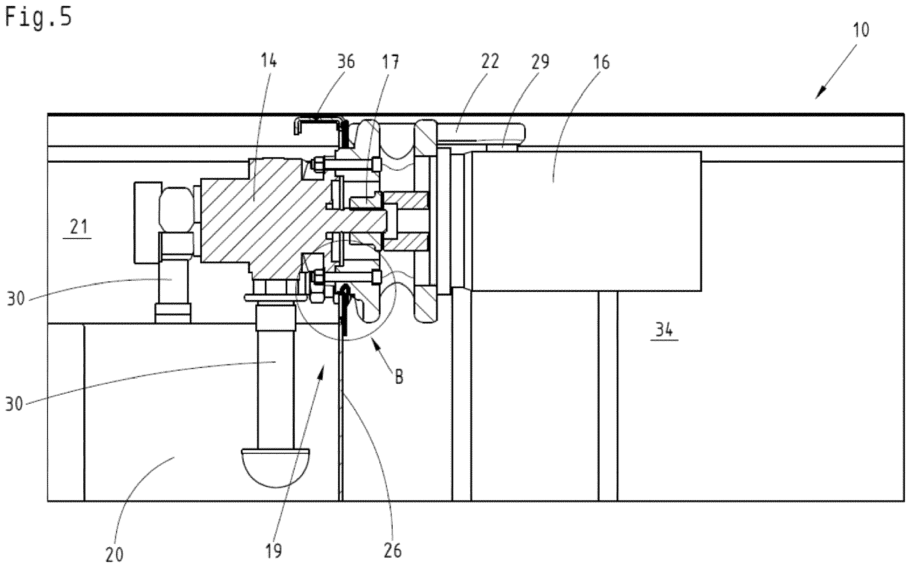

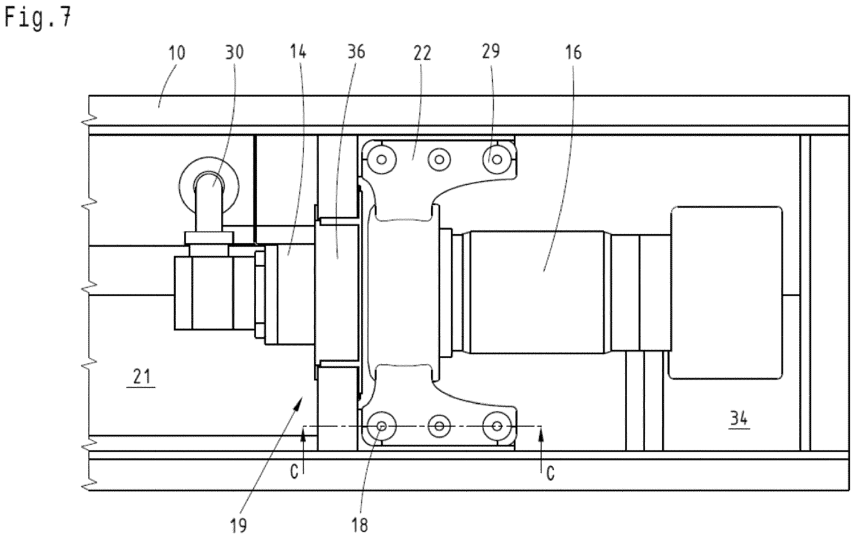

In den Fig. 1 - 8 ist in einem Ausführungsbeispiel ein Maschinengestell 10 einer Maschine zur Verarbeitung von Kunststoffen und anderer plastifizierbarer Massen, insbesondere einer Spritzgießmaschine und/oder deren Peripherie dargestellt. Das Maschinengestell weist wenigstens einen Behälter 20, z.B. einen Hydraulikmediumbehälter oder einen Ölbehälter, und wenigstens eine als starre bauliche Einheit ausgebildete, zur Förderung eines Hydraulikmediums, z.B. Öl aus dem Behälter 20 über Schläuche 30, in einen Kreislauf bestimmte Motor-Pumpeneinheit 12 mit wenigstens einer Pumpe 14 und wenigstens einem Motor 16 auf, welche über wenigstens ein Wirkverbindungsmittel 17, im Ausführungsbeispiel in Fig. 5 z.B. als eine Welle ausgeführt, miteinander gekoppelt sind. Weiter ist wenigstens eine konstruktive räumliche Trennung 19 vorgesehen und die Motor-Pumpeneinheit 12 ist bezüglich der konstruktiv räumlichen Trennung 19 so angeordnet, dass die Motor-Pumpeneinheit 12 wenigstens teilweise die konstruktive räumliche Trennung 19 so durchdringt, dass die Pumpe 14 der Motor-Pumpeneinheit 12 wenigstens teilweise, vorzugsweise vollständig, konstruktiv räumlich getrennt von dem Motor 16 der Motor-Pumpeneinheit 12 ist. Zur wenigstens teilweisen Lagerung der Motor-Pumpeneinheit 12 ist wenigstens ein Lagerelement 22 vorgesehen, welches entkoppelt vom Behälter 20 befestigt ist.

In einem bevorzugten Ausführungsbeispiel gemäß den Fig. 1 - 8 kann das Lagerelement 22 z.B. als ein Gussträger ausgeführt sein, durch den die Motor-Pumpeneinheit 12 wenigstens teilweise dringt, sodass die Lagerung der Motor-Pumpeneinheit 12 im Wesentlichen horizontal erfolgt. Horizontal bezieht sich in diesem Fall auf die Einbausituation der Motor-Pumpeneinheit 12. Prinzipiell kann das Lagerelement 22 jedoch beliebig ausgeführt sein. Auch die Einbausituation der Motor-Pumpeneinheit 12 kann prinzipiell beliebig erfolgen.

Für eine vorteilhaft stabile Konstruktion weist das Lagerelement 22 in einem bevorzugten Ausführungsbeispiel wenigstens ein Zehntel der Masse der Motor-Pumpeneinheit 12 auf.

Im Ausführungsbeispiel (Fig. 1, 2, 5 und 7) sind die konstruktive räumliche Trennung 19 so ausgeführt und die Motor-Pumpeneinheit 12 bezüglich der konstruktiven räumlichen Trennung 19 so angeordnet, dass die Pumpe 14 der Motor-Pumpeneinheit 12 wenigstens zu einem Teil, im Ausführungsbeispiel in Fig. 1 komplett, innerhalb eines Behälterraums 21 und gleichzeitig der Motor 16 der Motor-Pumpeneinheit 12 wenigstens zu einem Teil, im Ausführungsbeispiel in Fig. 1 komplett, außerhalb des Behälters 20 in einem Motorraum 34 angeordnet ist. Es ergeben sich durch die konstruktive räumliche Trennung 19 vorteilhaft wenigstens zwei Bereiche, wobei in einem ersten Bereich, z.B. im Behälterraum 21 die Pumpe 14 und in einem zweiten Bereich, der konstruktiv räumlich getrennt von dem ersten Bereich ist, z.B. im Motorraum 34 der Motor 16 angeordnet ist.

Gemäß einem bevorzugten Ausführungsbeispiel ist das Lagerelement 22 außerhalb des Behälters 20 befestigt.

Das Lagerelement 22 ist in einem weiteren bevorzugten Ausführungsbeispiel (Fig. 1, 2, 5, 7 und 8) am Maschinengestell 10 befestigt. Beispielsweise kann das Lagerelement 22 auch bevorzugt für eine vorteilhaft stabilere Konstruktion in einem oberen "steifen" Bereich des Maschinengestells 10 befestigt sein (Fig. 1, 2, 5, 7 und 8). Prinzipiell denkbar ist auch, dass das Lagerelement 22 in einem stabilen Bereich beispielsweise am Boden des Maschinengestells 10 befestigt ist.

Das Maschinengestell 10 kann in einem weiteren Ausführungsbeispiel gemäß Fig. 1, 2, 7 und 8 zur Befestigung des Lagerelements 22 wenigstens ein Auflageelement 38, z.B. eine Platte aufweisen. Das Auflageelement 38 kann prinzipiell beliebig ausgeführt sein. Das Lagerelement 22 liegt in einem weiteren Ausführungsbeispiel auf dem Auflageelement 38 auf, wobei in einem weiteren bevorzugten Ausführungsbeispiel das Auflageelement 38 wenigstens eine Ausnehmung aufweist, welche formschlüssig mit dem Lagerelement 22 so zusammenwirkt, dass das Lagerelement 22 auf dem Auflageelement 38 aufliegt. In einem weiteren bevorzugten Ausführungsbeispiel sind Dämpfungselemente 29 vorteilhaft zur besseren Führung in das Lagerelement 22 und/oder das Auflageelement 38 eingelassen.

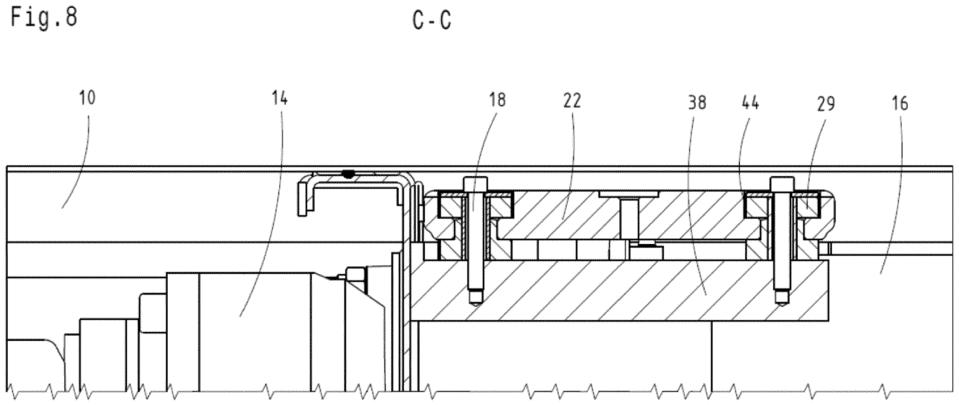

In einem Ausführungsbeispiel gemäß Fig. 8 erfolgt die Befestigung des Lagerelements 22 am Maschinengestell 10 bevorzugt wesentlich in senkrechter Richtung. Mit in senkrechter Richtung ist gemeint, dass beispielsweise die Befestigungsmittel 18 in senkrechter Richtung das Lagerelement 22 mit dem Auflageelement 38 verbinden. Vorteilhaft wirkt so keine zusätzliche seitliche, z.B. rechtwinklige Kraft auf die Befestigungsmittel 18, wodurch die Stabilität erhöht wird.

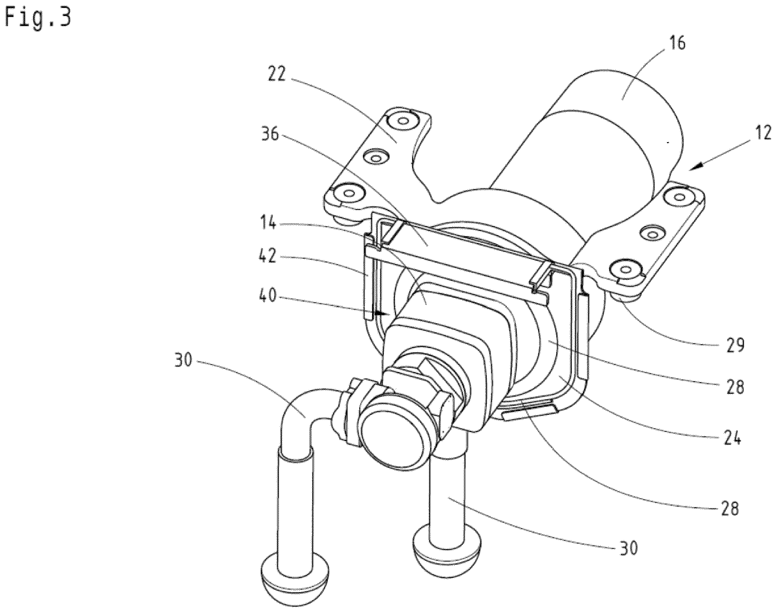

In einem weiteren Ausführungsbeispiel gemäß den Fig. 1 - 8 weist das Lagerelement 22 wenigstens ein Trennelement 24 und/oder wenigstens ein Plattenelement 36 auf. In Fig. 3 ist beispielsweise das Trennelement 24 als eine Platte ausgeführt, durch welche die Motor-Pumpeneinheit 12 dringt und die den Behälterraum 21 gegenüber dem Motorraum 34 abtrennt.

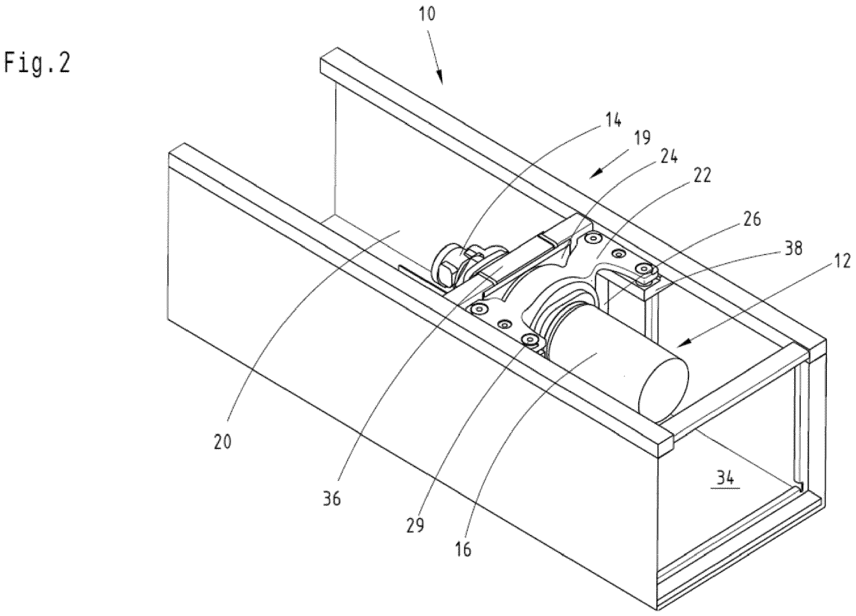

Das Plattenelement 36 ist in einem weiteren bevorzugten Ausführungsbeispiel gemäß den Fig. 1 - 8 mit dem Lagerelement 22, der Behälterwandung 26 und/oder dem Maschinengestell 10 lösbar verbunden. Vorteilhaft dient das Plattenelement 36 ebenfalls zur Abtrennung des Behälterraums 21 und des Motorraums 34. Weiter vorteilhaft kann es auch zusätzlich zur Fixierung und Justage des Trennelements 24, des Lagerelements 22 und/oder der Motor-Pumpeneinheit 12 dienen. Beispielsweise kann das Plattenelement 36 in Fig. 1 oder 2 über dem Trennelement 24 angeordnet und lösbar an dem Maschinengestell 10, der Behälterwandung 26 und/oder dem Lagerelement 22 befestigt sein. Wird das Plattenelement 36 z.B. von der Behälterwandung 26 gelöst, kann das Lagerelement 22 und die darin gelagerte Motor-Pumpeneinheit 12 vorteilhaft schnell und einfach beispielsweise von "oben" mittels eines Krans während eines Servicefalls getauscht werden.

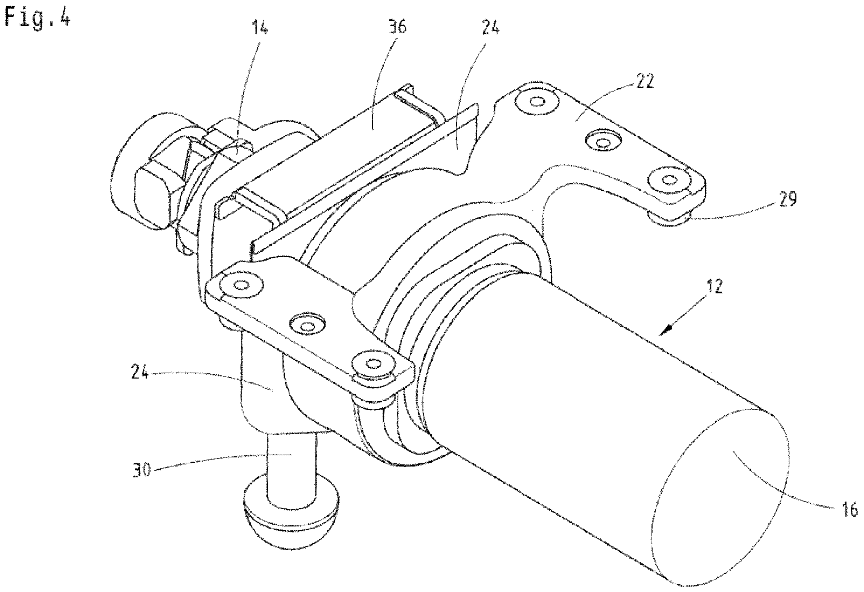

In einem weiteren Ausführungsbeispiel wird die konstruktive räumliche Trennung 19 vorzugsweise wenigstens durch ein Teil einer Behälterwandung 26 und/oder das Plattenelement 36 gebildet. Das Trennelement 24 unterteilt bevorzugt, beispielsweise in Fig. 3 und 4, die Motor-Pumpeneinheit 12 in einen Pumpenbereich, in dem die Pumpe 14 angeordnet ist, und in einem Motorbereich, in dem der Motor 16 angeordnet ist. Dazu weist das Trennelement 24 und/oder das Lagerelement 22 vorzugsweise wenigstens eine Ausnehmung 40, z.B. ein Loch auf, durch welches die Motor-Pumpeneinheit 12 dringen kann, sodass das Trennelement 24 die Motor-Pumpeneinheit 12 in wenigstens zwei Bereiche aufteilt. Das Trennelement 24, der Teil der Behälterwandung 26 und das Plattenelement 36 bilden z.B. in den Fig. 1 und 2 praktisch eine "vollständige" Behälterwandung 26, welche von der Motor-Pumpeneinheit 12 durchdrungen wird. Dabei deckt das Plattenelement 36 lösbar den oberen Teil der Behälterwandung 26 ab.

Das Plattenelement 36 ist einem weiteren bevorzugten Ausführungsbeispiel lediglich mit der Behälterwandung 26 verbunden, um vorteilhaft keine "harte" Verbindung zu schaffen und die durch die Motor-Pumpeneinheit 12 entstehenden Vibrationen und/oder Schwingungen nicht auf den Behälter 20 und/oder die Behälterwandung 26 zu übertragen.

In einem bevorzugten Ausführungsbeispiel ist die Behälterwandung 26 in einem Bereich ausgespart, in welchem zumindest das Trennelement 24 lösbar angeordnet ist. Beispielsweise ist in Fig. 1 und 2 die Behälterwandung 26 bevorzugt nach oben so ausgespart, dass das Trennelement 24 in die Aussparung eingesetzt und dort lösbar angeordnet werden kann. So kann das Trennelement 24 bzw. das Lagerelement 22 mit der Motor-Pumpeneinheit 12 von der Behälterwandung 26, z.B. mittels eines Krans entfernt werden, um eine Wartung der Motor-Pumpeneinheit 12 durchzuführen. Prinzipiell ist es auch denkbar, dass z.B. das Plattenelement 36 lösbar in der Aussparung der Behälterwandung 26 angeordnet und befestigt werden kann. Die Aussparung der Behälterwandung 26 kann beispielsweise gemäß in Fig. 1 als eine U-ähnliche Form ausgebildet sein.

Die konstruktive räumliche Trennung 19 ist in einem bevorzugten Ausführungsbeispiel hermetisch dicht. Durch die konstruktive räumliche Trennung 19 kann somit vorteilhaft keine Flüssigkeit und/oder Gas, insbesondere kein Öl dringen.

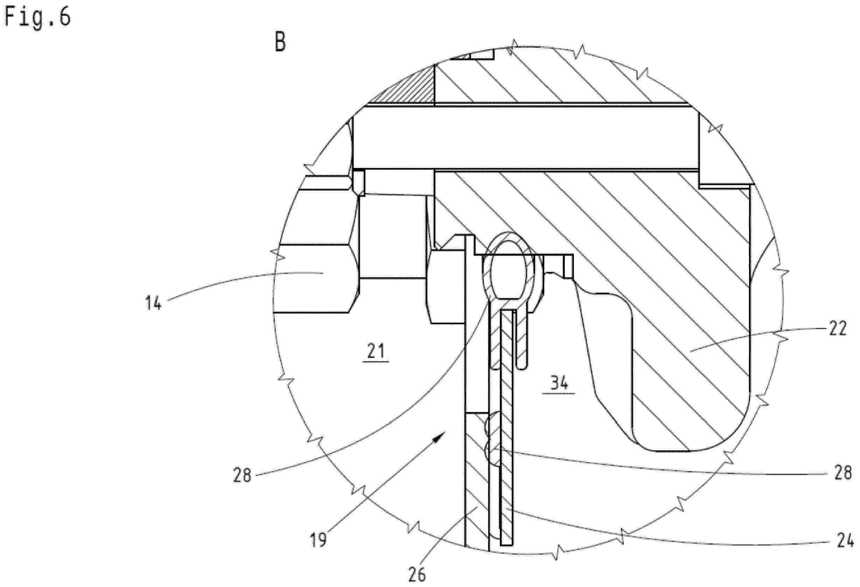

Um vorteilhaft eine möglichst hohe Dichtung zu gewährleisten, weist in einem bevorzugten Ausführungsbeispiel das Lagerelement 22, das Trennelement 24, das Plattenelement 36 und/oder der wenigstens ein Teil der Behälterwandung 26 wenigstens ein Dämpfungselement 29 und/oder wenigstens ein Dichtungselement 28 auf. Die Dämpfungselemente 29 und/oder Dichtungselemente 28 können beispielsweise Kunststoff, Kautschuk und/oder Silikon aufweisen und/oder als Scheiben, Unterlegscheiben, Ringe, Flansche, Dichtschnüre, Dichtlippen oder in anderen Formen ausgeführt sein. Auch sind verschiedene Dichtungssysteme nebeneinander möglich, wie z.B. eine geschäumte Dichtschnur sowie ein Kantenprofil mit Dichtelementen. Beispielsweise weist in Fig. 1 - 4 ein Dichtungselement 28 die Form einer Dichtungsschäumung auf. In Fig. 1 - 4, 7 und 8 weist z.B. das Lagerelement 22 mehrere Dämpfungselemente 29 auf. In Fig. 6 z.B. weist das Trennelement 24 mehrere Dichtungselemente 28 auf. Einerseits ist ein Dichtungselement 28 als Dichtungsschäumung ausgeführt, während ein anderes Dichtungselement 28 als eine ölbeständige Hohlkammerkantenschutzdichtung ausgeführt ist, die mit einer einseitigen Nut auf das Trennelement 24 aufgesteckt werden und sich über eine Hohlkammer an das Lagerelement 22 anlegen können. Kommt es im Betrieb aufgrund der Dynamik zu Bewegungen, können vorteilhaft die Anpressschwankungen über die Dichtung einfach ausgeglichen werden. Vorteilhaft lässt z.B. das als ölbeständige Hohlkammerkantenschutzdichtung ausgeführte Dichtungselement 28 in Fig. 6 Bewegungen der Motor-Pumpeneinheit 12 zu und gleicht weiter vorteilhaft z.B. eine Kippbewegung der Motor-Pumpeneinheit 12 aus.

In einem bevorzugten Ausführungsbeispiel bilden die Motor-Pumpeneinheit 12, das Lagerelement 22 und/oder das Trennelement 24 eine vormontierte Baugruppe. In Fig. 3 und 4 ist beispielsweise die Motor-Pumpeneinheit 12 mit montiertem Lagerelement 22 und montiertem Trennelement 24 als vormontierte Baugruppe dargestellt. Die Baugruppe kann somit vorteilhaft einfach und schnell in das Maschinengestell 10 eingesetzt und eingebaut werden, beispielsweise mittels eines Krans. In Fig. 3 und 4 kann das Plattenelement 36 nach dem Einsetzen der vormontierten Baugruppe eingesetzt werden, wodurch die Motor-Pumpeneinheit 12 bzw. die vormontierte Baugruppe fixiert wird. Denkbar ist aber auch, dass das Plattenelement 36 ebenfalls ein Teil der vormontierten Baugruppe bildet.

Beim Einbau der konstruktiven räumlichen Trennung 19 und/oder des Trennelements 24 kann es zu Beschädigungen beispielsweise des Trennelements 24 aufgrund einer benötigten Vorspannung des Trennelements 24 kommen. Daher weist in einem weiteren Ausführungsbeispiel (Fig. 3) die konstruktive räumliche Trennung 19 und/oder das Trennelement 24 wenigstens ein Abstandselement 42 auf. In Fig. 6 ist das Abstandelement 42 beispielsweise als ein umgekantetes oder ein gedoppeltes Blech ausgeführt.

Für eine vorteilhaft einfache und positionsgetreue Befestigung des Lagerelements 22 weist das Lagerelement 22 in einem weiteren bevorzugten Ausführungsbeispiel in Fig. 8 wenigstens eine Aufnahme 44 auf, in welche formschlüssig die Dämpfungselemente 29 aufgenommen werden können.

### Bezugszeichenliste

- 10: Maschinengestell
- 12: Motor-Pumpeneinheit
- 14: Pumpe
- 16: Motor
- 17: Wirkverbindungsmittel
- 18: Befestigungsmittel
- 19: konstruktive räumliche Trennung
- 20: Behälter
- 21: Behälterraum
- 22: Lagerelement
- 24: Trennelement
- 26: Behälterwandung
- 28: Dichtungselement
- 29: Dämpfungselement
- 30: Druck- und/oder Saugschlauch
- 34: Motorraum
- 36: Plattenelement
- 38: Auflageelement
- 40: Ausnehmung
- 42: Abstandselement
- 44: Aufnahme
- B: Ausschnitt
- C - C: Schnittlinie

## Patentansprüche

1. Maschinengestell (10) einer Maschine zur Verarbeitung von Kunststoffen und anderer plastifizierbarer Massen, insbesondere einer Spritzgießmaschine und/oder deren Peripherie, mit wenigstens einem Behälter (20) und wenigstens einer als starre bauliche Einheit ausgebildeten, zur Förderung eines Hydraulikmediums aus dem Behälter in einen Kreislauf bestimmten, Motor-Pumpeneinheit (12), aufweisend wenigstens eine Pumpe (14) und wenigstens einen Motor (16), welche über wenigstens ein Wirkverbindungsmittel (17) miteinander gekoppelt sind, wobei wenigstens eine konstruktive räumliche Trennung (19) vorgesehen ist und die Motor-Pumpeneinheit (12) bezüglich der konstruktiv räumlichen Trennung (19) so angeordnet ist, dass die Motor-Pumpeneinheit (12) wenigstens teilweise die konstruktive räumliche Trennung (19) so durchdringt, dass die Pumpe (14) der Motor-Pumpeneinheit (12) wenigstens teilweise, vorzugsweise vollständig, konstruktiv räumlich getrennt von dem Motor (16) der Motor-Pumpeneinheit (12) ist, und wobei die konstruktive räumliche Trennung (19) so ausgeführt und die Motor-Pumpeneinheit (12) bezüglich der konstruktiven räumlichen Trennung (19) so angeordnet sind, dass die Pumpe (14) der Motor-Pumpeneinheit (12) wenigstens zu einem Teil, vorzugsweise komplett, innerhalb und gleichzeitig der Motor (16) der Motor-Pumpeneinheit (12) wenigstens zu einem weiteren Teil, vorzugsweise komplett, außerhalb des Behälters (20) angeordnet sind, **dadurch gekennzeichnet, dass** zur wenigstens teilweisen Lagerung der Motor-Pumpeneinheit (12) wenigstens ein Lagerelement (22) vorgesehen ist, welches entkoppelt vom Behälter (20) befestigt ist, wobei das Lagerelement (22) wenigstens ein Trennelement (24) aufweist und die konstruktive räumliche Trennung (19) wenigstens durch das Trennelement (24) gebildet wird.

2. Maschinengestell nach Anspruch 1, **dadurch gekennzeichnet, dass** das Lagerelement (22) außerhalb des Behälters (20) und/oder am Maschinengestell (10) befestigt ist.

3. Maschinengestell nach Anspruch 2, **dadurch gekennzeichnet, dass** zur Befestigung des Lagerelements (22) am Maschinengestell (10) wenigstens ein Auflageelement (38) vorgesehen ist.

4. Maschinengestell nach einem der Ansprüche 2 oder 3, **dadurch gekennzeichnet, dass** die Befestigung des Lagerelements (22) am Maschinengestell (10) wesentlich in senkrechter Richtung erfolgt.

5. Maschinengestell nach einem der vorhergehenden Ansprüche, **dadurch gekennzeichnet, dass** das Lagerelement (22) wenigstens ein Plattenelement (36) aufweist.

6. Maschinengestell nach Anspruch 5, **dadurch gekennzeichnet, dass** das Plattenelement (36) lösbar mit dem Lagerelement (22), der Behälterwandung (26) und/oder dem Maschinengestell (10) verbunden ist.

7. Maschinengestell nach Anspruch 5 oder 6, **dadurch gekennzeichnet, dass** die konstruktive räumliche Trennung (19) weiterhin durch ein Teil einer Behälterwandung (26) und/oder das Plattenelement (36) gebildet wird.

8. Maschinengestell nach einem der Ansprüche 5 bis 7, **dadurch gekennzeichnet, dass** die Behälterwandung (26) in einem Bereich so ausgespart ist, in welchem zumindest das Trennelement (24) lösbar angeordnet ist.

9. Maschinengestell nach einem der vorhergehenden Ansprüche, **dadurch gekennzeichnet, dass** die konstruktive räumliche Trennung (19) hermetisch dicht ist.

10. Maschinengestell nach einem der vorhergehenden Ansprüche, **dadurch gekennzeichnet, dass** das Lagerelement (22), das Trennelement (24), das Plattenelement (36) und/oder der wenigstens ein Teil der Behälterwandung (26) wenigstens ein Dämpfungselement (29) und/oder wenigstens ein Dichtungselement (28) aufweist.

11. Maschinengestell nach Anspruch 10, **dadurch gekennzeichnet, dass** das Trennelement (24) mehrere Dichtungselemente (28) aufweist, welche unterschiedliche Dichtungssysteme aufweisen.

12. Maschinengestell nach Anspruch 11, **dadurch gekennzeichnet, dass** ein Dichtungselement (28) als eine Dichtungsschäumung und ein anderes Dichtungselement (28) als eine ölbeständige Hohlkammerkantenschutzdichtung, die mit einer einseitigen Nut auf das Trennelement (24) aufgesteckt ist und sich über eine Hohlkammer an das Lagerelement (22) anlegt, ausgeführt ist.

13. Maschinengestell nach einem der vorhergehenden Ansprüche, **dadurch gekennzeichnet, dass** die Motor-Pumpeneinheit (12), das Lagerelement (22) und/oder das Trennelement (24) eine vormontierte Baugruppe bilden.

## Claims

1. A machine frame (10) of a machine for processing plastics or other plastifiable materials, in particular an injection moulding machine and/or its peripheral equipment, with at least one container (20) and at least one motor-pump unit (12) constructed as a rigid constructional unit, for conveying a hydraulic medium from the container into a circular flow, comprising at least one pump (14) and at least one motor (16), which are coupled together by a means of at least one operative connection means (17), wherein at least one structural spatial division (19) is provided and the motor-pump unit (12) is so arranged relative to the structural spatial division (19) that the motor-pump unit (12) at least partially penetrates the structural spatial division (19) so that the pump (14) of the motor-pump unit (12) is at least partially, preferably completely, constructively spatially separated from the motor (16) of the motor-pump unit (12), and wherein the structural spatial division (19) is so implemented and the motor-pump unit (12) is so arranged relative to the structural spatial division (19) that the pump (14) of the motor-pump unit (12) is arranged at least partly, preferably completely, within and simultaneously the motor (16) of the motor-pump unit (12) is arranged at least partly, preferably completely, outside the container (20), **characterised in that** for the at least partial mounting of the motor-pump unit (12) there is provided at least one mounting element (22) which is attached decoupled from the container (20), wherein the mounting element (22) comprises at least one separating element (24) and the structural spatial division (19) is at least partially formed by the separating element (24).

2. A machine frame according to claim 1, **characterised in that** the mounting element (22) is attached outside the container (20) and/or on the machine frame (10).

3. A machine frame according to claim 2, **characterised in that** for attaching the mounting element (22) to the machine frame (10) there is provided at least one support element (38).

4. A machine frame according to claim 2 or 3, **characterised in that** the attachment of the support element (22) to the machine frame (10) is substantially in the vertical direction.

5. A machine frame according to any of the preceding claims, **characterised in that** the mounting element (22) comprises at least one plate element (36).

6. A machine frame according to claim 5, **characterised in that** the plate element (36) is releasably connected to the support element (22), the container wall (26) and/or the machine frame (10).

7. A machine frame according to claim 5 or 6, **characterised in that** the structural spatial division (19) is further formed by a part of a container wall (26) and/or the plate element (36).

8. A machine frame according to any of claims 5 to 7, **characterised in that** the container wall (26) is recessed in a region in which at least the separating element (24) is releasably arranged.

9. A machine frame according to any of the preceding claims, **characterised in that** the structural spatial division (19) is hermetically sealed.

10. A machine frame according to any of the preceding claims, **characterised in that** the mounting element (22), the separating element (24), the plate element (36) and/or the at least one part of the container wall (26) comprises at least one damping element (29) and/or at least one sealing element (28).

11. A machine frame according to claim 10, **characterised in that** the separating element (24) has a plurality of sealing elements (28), which have differing sealing systems.

12. A machine frame according to claim 11, **characterised in that** one sealing element (28) is configured as a sealing foam element and another sealing element (28) is configured as an oil-resistant hollow chamber edge protection seal, which is attached to the separating element (24) by a groove at one side and abuts on the mounting element (22) by means of a hollow section.

13. A machine frame according to any of the preceding claims, **characterised in that** the motor-pump unit (12), the mounting element (22) and/or the separating element (24) form a pre-mounted assembly.

## Revendications

1. Bâti de machine (10) d'une machine pour la transformation de matières plastiques et d'autres masses plastifiables, en particulier, machine de moulage par injection et/ou sa périphérie, avec au moins un récipient (20) et au moins une unité de pompage à moteur (12) réalisée sous la forme d'une unité structurelle rigide destinée à la fourniture en circuit fermé d'un fluide hydraulique provenant du récipient, présentant au moins une pompe (14) et au moins un moteur (16) qui sont couplés l'une à l'autre à l'aide d'au moins un agent de liaison actif (17), dans lequel il est prévu au moins une séparation spatiale constructive (19) et l'unité de pompage à moteur (12) est disposée par rapport à la séparation spatiale constructive (19) de telle sorte que l'unité de pompage à moteur (12) pénètre au moins partiellement dans la séparation spatiale constructive, de telle manière que la pompe (14) de l'unité de pompage à moteur (12) soit séparée spatialement de façon constructive du moteur (16) de l'unité de pompage à moteur (12) au moins partiellement, de préférence totalement et dans lequel la séparation spatiale constructive (19) est réalisée et disposée de telle manière, et l'unité de pompage à moteur (12) disposée par rapport à la séparation spatiale constructive (19) de telle manière, que la pompe (14) de l'unité de pompage à moteur (12) soit disposée au moins en partie, de préférence complètement à l'intérieur, et qu'en même temps le moteur (16) de l'unité de pompage à moteur (12) soit disposé au moins en partie, de préférence complètement à l'extérieur du récipient (20), **caractérisée en ce qu'**est prévu pour la fixation au moins partielle de l'unité de pompage à moteur (12) au moins un élément de fixation (22) qui est fixé de manière découplée par rapport au récipient (20), l'élément de fixation (22) présentant au moins un élément de séparation (24) et la séparation spatiale constructive (19) étant formée au moins par l'élément de séparation (24).

2. Bâti de machine selon la revendication 1, **caractérisé en ce que** l'élément de fixation (22) est fixé à l'extérieur du récipient (20) et/ou sur le bâti de machine (10).

3. Bâti de machine selon la revendication 2, **caractérisé en ce qu'**il est prévu au moins un élément de support (38) sur le bâti de machine (10) pour la fixation de l'élément de fixation (22).

4. Bâti de machine selon l'une des revendications 2 et 3, **caractérisé en ce que** la fixation de l'élément de fixation (22) sur le bâti de machine (10) s'effectue essentiellement dans la direction verticale.

5. Bâti de machine selon l'une des revendications précédentes, **caractérisé en ce que** l'élément de fixation (22) présente au moins un élément formant plaque (36).

6. Bâti de machine selon la revendication 5, **caractérisé en ce que** l'élément formant plaque (36) est relié de manière amovible avec l'élément de fixation (22), la paroi du récipient (26) et/ou le bâti de machine (10).

7. Bâti de machine selon la revendication 5 ou 6, **caractérisé en ce que** la séparation spatiale constructive (19) est formée en outre par une partie d'une paroi du récipient (26) et/ou l'élément formant plaque (36).

8. Bâti de machine selon l'une des revendications 5 à 7, **caractérisé en ce que** la paroi de récipient (26) est évidée dans une zone de telle manière qu'au moins l'élément de séparation (24) soit disposé de manière amovible.

9. Bâti de machine selon l'une des revendications précédentes, **caractérisé en ce que** la séparation spatiale constructive (19) est hermétique.

10. Bâti de machine selon l'une des revendications précédentes, **caractérisé en ce que** l'élément de fixation (22), l'élément de séparation (24), l'élément formant plaque (36) et/ou la ou les partie(s) de la paroi de récipient (26) présente(nt) au moins un élément d'amortissement (29) et/ou au moins un élément d'étanchéité (28).

11. Bâti de machine selon la revendication 10, **caractérisé en ce que** l'élément de séparation (24) présente plusieurs éléments d'étanchéité (28) qui présentent des systèmes d'étanchéité différents.

12. Bâti de machine selon la revendication 11, **caractérisé en ce qu'**un élément d'étanchéité (28) est réalisé sous la forme d'une mousse d'étanchéité et un autre élément d'étanchéité (28) sous la forme d'un joint de protection des bords de chambre creuse résistant à l'huile qui est emboîté avec une rainure d'un seul côté sur l'élément de séparation (24) et se met en place au-dessus d'une chambre creuse sur l'élément de fixation (22).

13. Bâti de machine selon l'une des revendications précédentes, **caractérisé en ce que** l'unité de pompage à moteur (12), l'élément de fixation (22) et/ou l'élément de séparation (24) forment un ensemble préassemblé.
